# EUROPÄISCHE PATENTSCHRIFT

(11) **EP 2 265 490 B1**
(45) Veröffentlichungstag und Bekanntmachung des Hinweises auf die Patenterteilung: **01.03.2017**
(21) Anmeldenummer: 09729619.8
(22) Anmeldetag: 20.03.2009
(51) Int. Cl.: B64C 1/06

(54) **FLUGZEUG MIT KRAFTÜBERTRAGUNGSELEMENT ZWISCHEN EINEM KABINENSTRUKTURELEMENT UND EINER PRIMÄRSTRUKTUR**
AIRCRAFT HAVING A FORCE TRANSMISSION ELEMENT BETWEEN A CABIN STRUCTURAL ELEMENT AND A PRIMARY STRUCTURE
AÉRONEF AVEC ÉLÉMENT DE TRANSMISSION DE FORCES ENTRE UN ÉLÉMENT STRUCTURAL DE CABINE ET UNE STRUCTURE PRIMAIRE

(30) Priorität: 10.04.2008 DE 102008018249; 10.04.2008 US 123866 P
(43) Veröffentlichungstag der Anmeldung: 29.12.2010
(73) Patentinhaber: Airbus Operations GmbH, 21129 Hamburg (DE)
(72) Erfinder: GRAEBER, Ulrike, 22587 Hamburg (DE); GROSSE-PLANKERMANN, Peter, 21629 Neu Wulmstorf (DE); PÄTZ, Martin, 23909 Ratzeburg (DE); BECKER, Holger, 22083 Hamburg (DE)
(74) Vertreter: Kopf Westenberger Wachenhausen Patentanwälte PartG mbB
(86) Internationale Anmeldenummer: PCT/EP2009/053301
(87) Internationale Veröffentlichungsnummer: WO 2009/124832

(56) Entgegenhaltungen:
- EP-A- 0 279 620
- EP-A- 0 437 870
- DE-A1- 19 639 915
- GB-A- 2 287 517
- US-A- 2 095 626
- US-A- 3 416 274
- US-A- 4 050 208
- US-A- 5 201 831
- US-A1- 2003 042 363
- US-A1- 2006 102 786

## Beschreibung

### GEBIET DER ERFINDUNG

Die vorliegende Erfindung betrifft ein Flugzeug mit einem Kraftübertragungselement, das ein Kabinenelement mit einer Flugzeugprimärstruktur lösbar verbindet.

### HINTERGRUND DER ERFINDUNG

In heutigen Verkehrsflugzeugen werden eine Innenkabine bildende Kabineneinbauelemente, wie beispielsweise Gepäckfächer, Verkleidungsteile oder sonstige Inneneinbauelemente, direkt an der Flugzeugprimärstruktur, wie beispielsweise Spanten, Stringer oder sonstige tragende Elemente des Flugzeugrumpfes befestigt. Aufgrund verschiedenster Strukturbeanspruchungen, beispielsweise aufgrund des Aufbaus eines Überdrucks im Flugzeuginneren, der zu einem Aufblähen des Rumpfes in großen Höhen führt, thermischen Beanspruchungen, denen Ausdehnungen aufgrund einer Temperaturdifferenz von bis zu 100°C zugrunde liegen können, oder flugmechanischen Belastungen insbesondere während der Start- und Landephase, die beispielsweise zu einer Verbiegung des Flugzeugs in seiner Längsachse führen, ist die Flugzeugprimärstruktur ständig Verformungen ausgesetzt. Diese Verformung der Flugzeugprimärstruktur führt zwangsläufig auch zu einer Veränderung der Lage der Kabineneinbauelemente zueinander. Damit sich die einzelnen Kabineneinbauelemente während dieser ständigen Verformung der Flugzeugprimärstruktur untereinander nicht beschädigen, sind hinreichend breite Spalte zwischen den einzelnen Kabineneinbauelementen vorgesehen, die aus Gründen der Ästhetik sowie aus Geräusch- und Temperaturgründen aufwendig abgedichtet werden müssen.

In der DE 10 2006 048 376.6, deren Anmelderin auch die Anmelderin der vorliegenden Anmeldung ist, ist beschrieben, wie Kabinenstruktursegmente, wie beispielsweise Deckenelemente oder Seitenteile, die mit Kabineneinbauelementen wie Gepäckfächern bestückt sein können, zu einer Kabinenstruktureinheit vorgefertigt werden können. Um eine Passagierkabine zu formen, werden mehrere Kabinenstruktureinheiten hintereinander angeordnet und untereinander verbunden. Die Kabinenstruktureinheit ist freitragend ausgebildet und ähnelt in der Form einer bodenlosen Halbtonne. Die Seitenwände einer solchen freitragenden Kabinenstruktureinheit werden mit der Flugzeugbodenstruktur verankert.

Die US 2003/0042363 A1 beschreibt eine Strukturanordnung mit einer Außenstruktur, welche mit einem Fußboden und einer Wandungsanordnung ausgebaut ist, wobei die Wandungsanordnung aus Wandungspaneelen besteht, die eine freitragende Hülle ausbilden.

Die US 2,095,626 betrifft eine Einrichtung zum Vermindern von Lärm und Vibrationen in Flugzeugkabinen, insbesondere von Passagierflugzeugen. Es ist eine Lärmabsorbierende Konstruktion für die Wände und die Fixierungen der Kabine beschrieben, um zu Verhindern, dass ein großer Teil des Lärms von außen in die Kabine gelangt und dass Motorvibrationen auf die Innenwände der Kabine übertragen werden.

Nun hat sich gezeigt, dass sich zum einen die Kabinenstruktureinheiten relativ zueinander und relativ zur Flugzeugprimärstruktur beispielsweise aufgrund der Belastungen durch Flugmanöver bewegen können und zum anderen, dass das Eigengewicht und auch eine eventuelle Beladung der Gepäckfächer zu einem Ausbeulen von Kabinenstruktursegmenten der Kabinenstruktureinheit, nämlich den beiden Seitenwänden, führt.

### ZUSAMMENFASSUNG DER ERFINDUNG

Der Erfindung liegt die Aufgabe zugrunde, eine Vorrichtung anzugeben, die eine Kabinenstruktureinheit wirkungsvoll stützt.

Die Aufgabe wird gelöst durch ein Flugzeug mit den Merkmalen des Anspruchs 1. Somit ist das Kraftübertragungselement in der Lage, Kraft in maximal zwei translatorischen Richtungen zu übertragen. Die Übertragung einer Kraft in einer dritten translatorischen Richtung ist nicht möglich. Wenn die Kabinenstruktursegmente, insbesondere die Seitenwände, einer in dem Flugzeug montierten Kabinenstruktureinheit aufgrund des Eigengewichts und der Zuladung in den Gepäckfächern ausbeulen, können diese sich maximal soweit verformen, bis die der Flugzeugprimärstruktur zugewandte Seite der Seitenwand an den Spanten der Flugzeugprimärstruktur anliegt. Durch das Kraftübertragungselement kann gezielt Kraft über die Seitenwände der Kabinenstruktureinheit in zwei Dimensionen in die Spanten und Stringer der Flugzeugprimärstruktur eingeleitet werden. Somit werden die Spanten und Stringer also nur durch solche Kräfte belastet, für die sie ausgelegt sind, nämlich durch Quer- und Längskräfte.

Durch das Starten oder Landen werden Beschleunigungskräfte auf das Kabinenstruktursegment entlang der Flugzeuglängsachse ausgeübt. Mittels des Kraftübertragungselements ist es möglich, einen Teil dieser Beschleunigungskräfte über die Seitenwände der Kabinenstruktureinheit in die Flugzeugprimärstruktur einzuleiten. Somit muss die Bodenstruktur nicht die gesamten auftretenden Beschleunigungskräfte, sowie daraus resultierende Drehmomente aufnehmen. Die Drehmomente ergeben sich, da die Beschleunigungskräfte über die gesamte Höhe der Kabinenstruktureinheit angreifen und damit einen Hebelarm zur Bodenstruktur ausbilden. Die Lage des Kraftübertragungselements kann so gewählt werden, dass die Drehmomente minimiert werden.

In vorteilhaften Ausgestaltung weist die Flugzeugprimärstruktur Spanten und Stringer auf, die dazu ausgelegt sind, nur in einer Richtung Kraft aufzunehmen. Das Kraftübertragungselement ist an Spanten und/oder Stringern angeordnet und überträgt nur in dieser Richtung die Kraft. Spanten sind ausgelegt, Kraft nur in der Richtung aufzunehmen, die in radialer Richtung auf ihn einwirken. Quer zu den Spanten wirkende Kräfte, also beispielsweise Kräfte entlang der Flugzeuglängsachse, können ein Ausknicken der Spanten bewirken und damit die Primärstruktur empfindlich schwächen. Ebenso verhält es sich mit den Stringern. Sie sind ausgelegt, entlang der Flugzeuglängsachse auftretende Kräfte aufzunehmen. Werden Querkräfte, beispielsweise Gewichtskräfte in den Stringer eingeleitet, kann dieser knicken und ebenfalls die Primärstruktur empfindlich schwächen. Da das Kraftübertragungselement vorteilhafter Weise nur in einer translatorischen Richtung die Kraft überträgt, kann somit in den Stringer bzw. in den Spant genau die Kraft eingeleitet werden, für deren Aufnahme der Stringer bzw. der Spant ausgelegt ist. Somit werden in den Stringer nur Kräfte, die entlang der Flugzeuglängsachse entstehen, eingeleitet. In den Spant werden entsprechend nur Kräfte eingeleitet, die senkrecht auf den Spant stehen.

In einer weiteren vorteilhaften Ausgestaltung der Erfindung befindet sich zwischen dem Strukturlagerelement und dem Kabinenlagerelement eine reibungsmindernde Beilage. Diese Beilage kann verhindern, dass Reibkräfte, die quer zu der Richtung wirken, in der die Kraft in die Spanten und Stringer eingeleitet werden dürfen, eine Größe erreichen, die sich schädlich für die Flugzeugprimärstruktur auswirken kann. Die Reibkräfte können entstehen, wenn während des Betriebes des Flugzeuges eine Relativbewegung zwischen der Flugzeugstruktur und dem Kabinenstrukturelement, genauer gesagt zwischen dem Strukturlagerelement und dem Kabinenlagerelement, entsteht. Als Beilage können Kunststoffe wie PTFE oder PVDF zum Einsatz kommen. Natürlich kann die Beilage auch in Form einer Beschichtung gestaltet sein. Gerade wenn der Spant aus Aluminium besteht und als Z-Spant gestaltet ist, bietet es sich an, dass der Schenkel, der das Strukturlagerelement bilden kann, beschichtet wird. Als ein mögliches Verfahren bietet es sich an, diesen Schenkel beispielsweise hart zu anodisieren. Bereits diese Beschichtung wirkt stark reibungsmindernd. Zusätzlich kann diese Schicht noch mit PTFE zu einer weiteren Reibungsminderung ausgestattet werden.

Auch kann durch diese Beilage ein Geräusch, das eventuell zwischen dem Kabinenlagerelement und dem Strukturlagerelement durch die Relativbewegung auftreten kann, reduziert bzw. unterbunden werden.

In vorteilhafter Weise kann zwischen dem Strukturlagerelement und dem Kabinenlagerelement ein Feder-Dämpfer-Element angeordnet sein. Während des Betriebes des Flugzeuges können nicht nur Relativbewegungen zwischen der Kabinenstruktureinheit und der Flugzeugstruktur entstehen, sondern auch Schwingungen, die beispielsweise durch die Triebwerke verursacht werden. Wenn diese Schwingungen oder Vibrationen direkt von der Flugzeugstruktur an die Kabinenstruktureinheit übertragen werden und die Kabinenstruktureinheit eine unzureichende Eigendämpfung besitzt, können diese Schwingungen zu einer Geräuschkulisse in der Fluggastkabine führen. Zusätzlich würden die Vibrationen der Flugzeugstruktur auch zu Vibrationen der Kabinenstruktureinheit führen. Beide Einflüsse, nämlich die Geräuschkulisse und die Vibrationen, stehen dem Anspruch der Airlines entgegen, dem Flugpassagier den Aufenthalt an Bord des Flugzeugs so angenehm wie möglich zu gestalten. Das Feder-Dämpfer-Element reduziert diese negativen Einflüsse. Natürlich müssen die Kennlinien der Feder und des Dämpfers so abgestimmt sein, dass keine Resonanzen zwischen der Kabinenstruktureinheit und der Flugzeugstruktur entstehen können. Das Feder-Dämpfer-Element kann beispielsweise als Elastomer, z.B. Gummi, ausgebildet sein. Auch bietet ein solches Feder-Dämpfer-Element die Möglichkeit, Querkräfte, deren Entstehung und Schädlichkeit für die Primärstruktur bereits oben ausgeführt wurde, zumindest bis auf einen unschädlichen Anteil zu dämpfen. Zusätzlich kann durch ein solches Feder-Dämpfer-Element auch eine gleichmäßige Flächenpressung zwischen dem Kabinenlagerelement und dem Strukturlagerelement erzeugt werden. Dadurch können lokal punktuell auftretende Belastungsspitzen, die ansonsten möglicherweise zu einer Beschädigung der Kabinenstruktureinheit, des Spants und/oder des Stringers führen könnten, vermieden werden. Auch ist ein solches Feder-Dämpfer-Element geeignet, Fertigungstoleranzen auszugleichen. Natürlich kann das Feder-DämpferElement auch genutzt werden, um einen Wärmeübergang durch Kontakt zwischen der Kabinenstruktureinheit und der Flugzeugstruktur zumindest weitestgehend zu unterbinden.

In bevorzugter Weise ist das Feder-Dämpfer-Element entweder mit dem Kabinenlagerelement oder dem Strukturlagerelement fest verbunden. Die Befestigung führt dazu, dass das Feder-Dämpfer-Element bei zwischen der Kabinenstruktureinheit und der Flugzeugstruktur vorhandenen Relativbewegungen seinen ihm zugeordneten Ort nicht verlässt, also das "Wandern" beginnt. Auch bietet die Befestigung die Möglichkeit, das Feder-Dämpfer-Element abschnittsweise nur an vorbestimmten Positionen anzubringen. Die Größe der Abschnitte muss entsprechend der auftretenden Belastungen gewählt werden. Natürlich kann beispielsweise ein als Elastomer ausgebildetes Feder-Dämpfer-Element auch über die gesamte Höhe oder Länge der Kabinenstruktureinheit oder der Flugzeugstruktur durchgehend angebracht sein.

Da das Feder-Dämpfer-Element nur mit einer der Komponenten, also entweder mit der Kabinenstruktureinheit oder der Flugzeugstruktur verbunden ist, wird das Feder-Dämpfer-Element nur auf Druck und nicht auf Zug beansprucht. Dies eröffnet eine breitere Auswahl an Feder-Dämpfer-Elementen, da es beispielsweise bei Elastomeren Sorten gibt, die durch Zugbelastung zerstört werden.

Auch ermöglicht eine einseitige Befestigung, dass die Kabinenstruktureinheit sich von den Spanten und Stringern vollständig lösen kann, sich also diese Komponenten nicht mehr berühren.

In einer weiteren vorteilhaften Ausgestaltung der Erfindung weist die Kabinenstruktureinheit in Flugzeuglängsrichtung gesehen links und rechts je eine Seitenwand mit einem oberen Ende und einem unteren Ende auf, zwischen denen das Kabinenlagerelement wenigstens teilweise durchgängig verläuft und mit der Seitenwand fest verbunden ist. Gerade bei der Abstützung der Seitenwand gegen den Spant ist es zweckmäßig, das Feder-Dämpfer-Element an der Seitenwand zu befestigen. Damit kann das Kabinenlagerelement so ausgebildet sein, dass es das Feder-Dämpfer-Element automatisch fixiert. Da die Seitenwände empfindlich gegen Ausbeulen sind, kann ein durchgängiges, mit der Seitenwand fest verbundenes Kabinenlagerelement gleichzeitig als Versteifung dienen.

In einer weiteren vorteilhaften Ausgestaltung der Erfindung ist das untere Ende der Seitenwand von der Flugzeugprimärstruktur weiter entfernt als das obere Ende und das Kabinenlagerelement so ausgebildet, dass der Abstand des Kabinenlagerelements zum Strukturlagerelement im Wesentlichen konstant ist. Durch die Ausgestaltung des Kabinenlagerelements in der Art, dass der Abstand zwischen dem Kabinenlagerelement und dem Spant konstant ist, können gleiche Feder-Dämpfer-Elemente verwendet werden. Das Kabinenlagerelement baut also auf der Rückseite der Seitenwand an der unteren Lagerstelle höher auf als an der oberen.

In vorteilhafter Weise ist an dem Kabinenlagerelement eine Stabilisierungsrippe angeformt. In der Regel sind die Seitenwände aus faserverstärktem Kunststoff hergestellt. Die hierbei erzeugte Form entspricht in etwa der eines Rohrsegments. Diese gekrümmten Wände besitzen bei einer entsprechenden Krafteinleitung nur einen geringen Widerstand gegen ein Ausbauchen, der zusätzlich durch Öffnungen für beispielsweise Fenster verringert sein kann. Wenn auf die Seitenwände der freitragenden Kabinenstruktureinheit beispielsweise Gewichtskräfte wirken, neigen die Seitenwände zum Ausbauchen. Wenn die Kabinenlagerelemente vom oberen zum unteren Ende durchgängig verlaufen, können diese besonders vorteilhaft in U-Form ausgebildet sein, so dass die Schenkel senkrecht auf der Seitenwand stehen, dadurch den Widerstand gegen das Ausbeulen enorm vergrößern und damit die Seitenwand stabilisieren.

In einer vorteilhaften Ausgestaltung der Erfindung ist das Kabinenlagerelement als eine Stütze mit einem Fortsatz ausgeformt, die mit einem Schiebeelement fest verbunden ist. Dieser Fortsatz greift in ein U-förmig gestaltetes Strukturlagerelement ein, der fest mit dem Stringer verbunden ist. Das Strukturlagerelement kann mit einem ebenfalls U-förmigen Feder-Dämpfer-Element, vorzugsweise aus einem Elastomer, versehen sein. Das Strukturlagerelement ist so angeordnet, dass nur in Flugzeuglängsachse wirkende Kräfte in den Stringer eingeleitet werden können. Die Schenkel des U-förmigen Strukturlagerelements umfassen den Fortsatz so, dass in und entgegen der Flugrichtung wirkende Kräfte übertragen werden können. Um eine bessere Kraftverteilung und damit eine geringere Belastung pro Fortsatz zu erlangen, kann auch eine Stütze mit mehr Fortsätzen versehen sein.

Damit sich die Fortsätze bei der Montage leicht in das U-förmig gestaltete Strukturlagerelement, respektive das Feder-Dämpfer-Element, finden, kann das Strukturlagerelement, das Feder-Dämpfer-Element und/oder der Fortsatz mit einer Einführschräge versehen sein, entlang derer die beiden in Anlage zu bringenden Komponenten bei der Montage bis in ihre endgültige Position gleiten können. Auf diese Weise kann es zu einer gewissen Selbst-Positionierung der Komponenten bei der Montage kommen.

In einer weiteren vorteilhaften Ausgestaltung der Erfindung ist das Schiebeelement in einer Schiene justierbar angeordnet, die mit dem Kabinenstruktursegment fest verbunden ist. Aufgrund von Fertigungstoleranzen muss die Kabinenstruktureinheit zu der Flugzeugstruktur in Flugzeuglängsrichtung ausgerichtet werden. Durch eine Justagemöglichkeit können die einzelnen Kabinenstruktursegmente so eingerichtet werden, dass die Fugen zwischen den einzelnen Kabinenstruktursegmenten die gleiche Breite aufweisen. Die Zugriffmöglichkeit auf das Schiebeelement, das sich auf der der Flugzeugstruktur zugewandten Seite des Kabinenstruktursegments befindet, ist bei der im Flugzeugrumpf aufgeklappter Kabinenstruktureinheit durch die Fensteröffnungen gewahrt. Um eine leichtgängige Verschiebbarkeit des Schiebeelements zu erreichen, kann zwischen dem Schiebelement und der Schiene eine reibungsmindernde Beilage eingelegt sein. Der Justagevorgang selber kann beispielsweise durch eine Schraube erfolgen, die an einer Stirnseite des Schiebeelements angreift. Der Justagevorgang kann auch über einen Schnappverschluss erfolgen. Dieser löst aus, wenn die richtige Position erreicht ist. Dadurch wird der händisch durchzuführende Justagevorgang automatisiert.

In einer weiteren vorteilhaften Ausgestaltung der Erfindung ist die Schiene in der Richtung angeordnet, in der das Kraftübertragungselement die Kraft übertragen kann. Durch diese Anordnung der Schiene können alle an der Schiene entlang der Flugzeuglängsachse angreifenden Kräfte in den Stringer eingeleitet werden. Es treten somit durch die Lage der Schiene, nämlich parallel zum Stringer, keine Kraftanteile auf, die ansonsten in den Spant geleitet werden müssten.

Es wird ein Flugzeug mit einem Dichtelement für eine Kabinenstruktureinheit mit wenigstens zwei durch einen Spalt voneinander beabstandeten Kabinenstruktursegmenten beschrieben, wobei der Spalt durch ein elastisches Dichtelement wenigstens teilweise geschlossen ist. Das Dichtelement ist als Hohlkammer ausgebildet, das durch ein Paar einander gegenüberliegender Längswände, die den Spalt überbrücken, und durch ein Paar einander gegenüberliegender Querwände, die an den Kabinenstruktursegmenten anliegen, begrenzt ist, dass bei einer Spaltverkleinerung sich das Längswandpaar gemäß einer vorbestimmten Federkonstante zueinander hin einbeult und dass sich bei Berührung des Längswandpaares die Federkonstante ändert.

Durch diese Ausgestaltung können Relativbewegungen, wie sie beispielsweise durch Start- oder Landevorgänge auftreten können, einzelner beispielsweise in Flugzeuglängsachse hintereinander angeordneter Kabinenstruktursegmente solange abgedämpft werden, bis sich die Längswände des Dichtelements berühren. Ein solches Dichtelement kann zu einem innerhalb einer Kabinenstruktureinheit, also zwischen den einzelnen benachbarten Kabinenstruktursegmenten, die eine Kabinenstruktureinheit bilden, und zum anderen zwischen zwei benachbarten Kabinenstruktureinheiten angeordnet sein. Das Dichtelement kann folglich längs zur Flugzeuglängsachse und quer zu ihr angeordnet sein. Natürlich kann ein solches Dichtelement auch zwischen der Fußbodenstruktur und dem auf ihm befestigten Seitenteil verlaufen. Bis zum Zeitpunkt der Berührung der Längswände werden keine bzw. nur geringe Kräfte an das benachbarte Kabinenstruktursegment, respektive die benachbarte Kabinenstruktureinheit, übertragen. Erst ab dem Zeitpunkt, wenn sich beide Längswände des Dichtelements berühren und sich die Kabinenstruktursegmente und/oder Kabinenstruktureinheiten weiterhin aufeinander zu bewegen, kann die hierbei entstehende Kraft in das benachbarte Kabinenstruktursegment und/oder die benachbarte Kabinenstruktureinheit eingeleitet werden. Die Federkennlinie des Dichtelements, aufgetragen in einem Kraft-Weg-Diagramm, kann somit einen Knick bzw. einen unstetigen Verlauf aufweisen. Diese Ausformung des Dichtelements bietet also den Vorteil, dass sich die einzelnen Kabinenstruktursegmente sowohl innerhalb als auch gegenüber der benachbarten Kabinenstruktureinheit aufgrund der auftretenden Relativbewegungen nicht berühren können, sogar ab einem kritischen Punkt die auftretenden Kräfte gezielt in das benachbarte Kabinenstruktursegment einleiten können.

Darüber hinaus kann eine Längswand des Dichtelements farblich gestaltet werden. So kann beispielsweise die für die Passagiere sichtbare Längswand farblich an das Interieur der Kabine angepasst werden. Natürlich ist es auch möglich, die dem Passagierraum zugewandte Längswand des Dichtelements nicht mit den Kabinenstruktursegment bündig verlaufen zu lassen, sondern das Dichtelement gegenüber dem Kabinenstruktursegment zurückzusetzen. Dadurch würde sich eine Schattenfuge ergeben.

In einer vorteilhaften Ausgestaltung ist in der Hohlkammer des Dichtelements ein Medium eingeschlossen. Dieses Medium kann gasförmiger, flüssiger oder auch fester Natur sein. Das Medium muss jedoch eine gewisse Kompressionsfähigkeit aufweisen. Durch das Einlagern des Mediums ergibt sich die Möglichkeit, die Federkennlinie des Dichtelements zu beeinflussen. Zudem sollte das Medium gut geräuschdämmend sein, damit Wind- und Triebwerksgeräusche weitestgehend nicht in die Passagierkabine gelangen. Außerdem sollte das Medium gut wärmedämmend sein, damit die in großen Flughöhen vorherrschende extreme Kälte nicht über dieses Dichtelement in die Passagierkabine gelangen kann. Bei einer Verwendung eines flüssigen oder gasförmigen Mediums muss die Hohlkammer an seinen beiden Enden flüssigkeitsdicht oder gasdicht verschlossen werden. Dies kann beispielsweise durch Vulkanisieren, Schweißen oder Kleben erfolgen.

In einer weiteren vorteilhaften Ausgestaltung weist die Querwand des Dichtelements eine Feder auf, die so in eine in dem Kabinenstruktursegment vorgesehene Nut greift, dass die Querwand bezüglich dem Kabinenstruktursegment ortmäßig festgelegt ist. Somit bleiben die Querwände in Kontakt mit den Kabinenstruktursegmenten, wenn sich die einzelnen Kabinenstruktursegmente gegeneinander quer zur Flugzeuglängsachse verschieben und damit beispielsweise einen Versatz der einzelnen Kabinenstruktursegmente untereinander erzeugen. Durch die Ortsgebundenheit der Querwand bezüglich des Kabinenstruktursegments kann sich keine Spalte zwischen der Querwand des Dichtelements und dem Kabinenstruktursegment bilden. Durch diese Spalten würden sowohl Kälte als auch Geräusche in die Passagierkabine gelangen und damit das Wohlbefinden der Passagiere in der Passagierkabine erheblich mindern.

Gemäß einem weiteren Aspekt wird die Kabinenstruktureinheit zur Anbringung von Kabineneinbauelementen für ein Flugzeug, insbesondere für eine Flugzeug, wie es weiter oben oder in der DE 10 2006 048 376.6 beschrieben wurde, vorgeschlagen, wobei die Kabinenstruktureinheit derart eingerichtet ist, dass ein Kabineneinbauelement anbringbar ist, wobei die Kabinenstruktureinheit freitragend ausgebildet ist, wobei die Kabinenstruktureinheit an einer Flugzeugstruktur befestigbar ist, wobei die Kabinenstruktureinheit Kabinenstruktursegmente aufweist und wobei die Kabinenstruktursegmente mittels Scharnieren klappbar miteinander verbunden sind.

Jede Kabinenstruktureinheit kann in eine Vielzahl von Segmenten aufgeteilt werden. Die Segmente können aus längsverlaufenden, versteifenden Rippen, Versteifungsblenden, Luftkanälen oder einem anderen Segment bestehen, das eine geeignete statische Eigenschaft zur Verwendung als Kabinenstruktureinheit bereitstellt. Die Gesamtheit der Kabinenstruktursegmenten können die Kabinenstruktureinheit beispielsweise in Umfangsrichtung ausbilden.

Indem die Kabinenstruktureinheit, insbesondere die Struktursegmente, mittels Scharnieren verbunden sind, kann das Volumen der ganzen Einheit verringert werden, so dass die Montage der Einheit entschärft sein kann. Die Kabinenstruktureinheit kann zusammengeklappt, zu der Montageposition geschafft und dort zu der funktionsfähigen Form auseinandergeklappt werden. Es ist auch möglich, die Kabinenstruktureinheit mit seinen Kabineneinbauelementen außerhalb des Flugzeugrumpfes vorzufertigen und anschließend die vorgefertigte und zusammengeklappte Kabinenstruktureinheit in den Flugzeugrumpf an die Montageposition zu transportieren. Das Scharnier ist so angeordnet, dass die Achse, um die das wenigstens eine Kabinenstruktursegment einer Kabinenstruktureinheit klappt, im Wesentlichen parallel zur Flugzeuglängsachse verläuft. Die vorgefertigte und zusammengeklappte Kabinenstruktureinheit kann durch schmale Öffnungen wie Flugzeugtüren transportiert werden, so dass es auch leichter ist, das Kabinen-Layout zu ändern, wenn der Rumpf zusammengebaut ist. Weiterhin können zur gleichen Zeit weniger Monteure innerhalb des Flugzeugrumpfes notwendig sein, wenn die Kabinenstruktureinheit außerhalb eines Flugzeuges vorgefertigt ist, so dass Beeinträchtigungen zwischen den Monteuren aufgrund des geringeren Montageraumes im Rumpf verringert werden kann. Auf diese Weise kann der Montageprozess der Kabinenstruktureinheit wie auch der gesamte Montageprozess des Flugzeugs beschleunigt und weniger kompliziert gestaltet werden.

Gemäß einer weiteren beispielhaften Ausführungsform weist die Kabinenstruktureinheit ferner Anpassungselemente auf. Die Anpassungselemente sind derart eingerichtet, dass sie die Kabineneinbauelemente mit der Flugzeugstruktur oder mit der Fußbodenstruktur verbinden.

Um die Kabineneinbauelemente mit der Flugzeugstruktur zu verbinden, können mehrere beispielsweise standardisierte Anschlusselemente bereitgestellt werden, um einen einfachen und wenig Zeit benötigenden Montageprozess zu erreichen. Wenn das Kabineneinbauelement beispielsweise aus einem Fenster besteht, muss das Fenster mit der Öffnung in der Flugzeugstruktur verbunden werden. Auf diese Weise muss ein Anpassungselement vorgesehen werden, das die Innenwandung des Flugzeugs gegenüber dem Kabineneinbauelement abdichtet. Die Anpassungselemente können aus einer einfachen Einsteck- und Schnappverbindung bestehen, die Fensterdichtelemente etc. aufweist. Die Anpassungselemente können auch Ausgleichseigenschaften bereitstellen, um Relativbewegungen zwischen der Kabinenstruktureinheit und der Rumpfstruktur auszugleichen, die sich beispielsweise aus unterschiedlichen Temperatur- oder Druckniveaus ergeben. Die Anpassungselemente können auch aus der Gruppe bestehend aus elektrischen Verbindungselementen, Luftkanalverbindungselementen oder Datenanschlussverbindungselementen ausgewählt sein.

Gemäß einer weiteren beispielhaften Ausführungsform ist die Kabinenstruktureinheit derart eingerichtet, dass sie die Flugzeugstruktur stützt. Wie bereits oben erwähnt ist die Kabinenstruktureinheit selbsttragend, so dass die Kabinenstruktureinheit ihr eigenes Gewicht tragen kann. Zusätzlich kann die Kabinenstruktureinheit derart eingerichtet sein, um Kräfte und Drehmomente beispielsweise von der Rumpfstruktur abzudämpfen. Aus diesem Grund kann die Flugzeugstruktur leichtgewichtiger ausgelegt werden, so dass das Flugzeuggesamtgewicht verringert werden kann. Die Kabinenstruktureinheit kann daher statische Eigenschaften aufweisen, um die Flugzeugstruktur zu stützen.

Gemäß einem weiteren Aspekt wird ein Verfahren zur Montage einer Kabinenstruktureinheit für ein Flugzeug, wie in der DE 10 2006 048 376.6 beschrieben, bereitgestellt. Die Kabinenstruktureinheit wird außerhalb einer Flugzeugstruktur vorgefertigt. Die vorgefertigte Kabinenstruktureinheit wird durch eine Öffnung der Flugzeugstruktur eingeführt. Weiterhin wird die vorgefertigte Kabinenstruktureinheit an eine vorbestimmte Position in einer Flugzeugstruktur aufgesetzt. Die vorgefertigte Kabinenstruktureinheit wird an der vorbestimmten Position in der Flugzeugstruktur befestigt.

Indem dieses Montageverfahren ausgeführt wird, ist es möglich, die Kabinenstruktureinheit außerhalb des Flugzeugs vorzufertigen, so dass die Montageverfahren für das Flugzeug getrennt und gleichzeitig ausgeführt werden können. Auf diese Weise kann beispielsweise die Dämmung der Flugzeugstruktur montiert werden, während die Kabinenstruktureinheit außerhalb des Flugzeugs zeitgleich gefertigt werden kann. In einem nächsten Schritt können die gesamten Kabinenstruktureinheiten durch die offenen Rumpfsektionen eingeführt und dann an einer vorbestimmten Position in der Flugzeugstruktur eingebaut werden. Auf diese Weise kann die logistische Komplexität verringert werden, weil alle Ausstattungsteile wie Kabineneinbauelemente außerhalb des Flugzeugrumpfes gelagert und gefertigt werden können. Auch die Zahl der Monteure, die gleichzeitig im Rumpf arbeiten, kann verringert werden, weil die Monteure für die Kabinenstruktureinheit die Kabine außerhalb des Flugzeugrumpfes montieren können. Folglich können auch die Montageabläufe ökonomischer werden, weil mehr Raum für die Monteure verfügbar sein kann. Auf diese Weise, können die Montageabläufe für den Rumpf, die Kabine und das ganze Flugzeug entspannter und schneller ausgeführt werden.

Gemäß einer weiteren beispielhaften Ausgestaltung des Verfahrens ist die vorgefertigte Kabinenstruktureinheit klappbar ausgeführt. Auf diese Weise wird die vorgefertigte Kabinenstruktureinheit zusammengeklappt, bevor die vorgefertigte Kabinenstruktureinheit durch die Öffnung der Flugzeugstruktur geführt wird. An der vorbestimmten Position in der Flugzeugstruktur wird die vorgefertigte Kabinenstruktureinheit auseinandergeklappt.

Durch das Zusammenklappen der Kabinenstruktureinheiten, respektive der vorgefertigten Kabinenstruktureinheiten, muss weniger Raum in Bezug auf kleinere Öffnungen im Flugzeugrumpf vorgesehen werden, um die Kabinenstruktureinheit in den Rumpf zu den vorbestimmten Befestigungspunkten zu führen. Im Flugzeugrumpf kann die Kabinenstruktureinheit aufgeklappt und an der vorbestimmten Position befestigt werden. Auf diese Weise sind kleine Öffnungen wie Türen in der Lage, die zusammengeklappte vorgefertigte Kabinenstruktureinheit in den Rumpf einzuführen. Auf diese Weise können Kabinenstruktureinheiten auch in zerlegtem Zustand montiert werden, auch nachdem das Flugzeug komplett montiert ist, respektive die Rumpfarbeiten beendet sind. Wenn beispielsweise die Passagierflugzeuge flexible Kabinen-Layouts bevorzugen, können Änderungen im Kabinen-Layout schnell dadurch bereitgestellt werden, indem die Kabinenstruktureinheiten zusammengeklappt, sie durch die Türe aus dem Flugzeugrumpf entfernt und eine andere anders geartete Kabinenstruktureinheit eingebaut wird.

Gemäß einer weiteren beispielhaften Ausgestaltung des Verfahrens wird das Kabineneinbauelement in die vorgefertigte Kabinenstruktureinheit außerhalb der Flugzeugstruktur eingebaut. Auf diese Weise können die Kabineneinbauelemente an die Kabinenstruktureinheit montiert werden, die wiederum zeitgleich an die Flugzeugstruktur montiert werden kann. Der Gesamtproduktionszeitraum kann verringert werden.

Gemäß einer weiteren beispielhaften Ausgestaltung des Verfahrens wird die Öffnung der Flugzeugstruktur aus der Gruppe bestehend aus Rumpftüren, Öffnungen von Rumpfsegmenten und Ladeluken ausgewählt.

Gemäß einer weiteren beispielhaften Ausgestaltung des Verfahrens weist die Kabinenstruktureinheit Kabinenstruktursegmente auf, wobei die Kabinenstruktursegmente mittels Scharnieren klappbar miteinander verbunden sind. Die Kabinenstruktureinheit kann auch in Kabinenstruktursegmente unterteilt werden, die untereinander mit Scharnieren verbunden sind, so dass mehrere Möglichkeiten bereitgestellt werden können, eine Kabinenstruktureinheit zusammenzuklappen. Auf diese Weise kann ein sehr kleines Volumen einer zusammengeklappten und vorgefertigten Kabinenstruktureinheit bereitgestellt werden, so dass sogar die kleinsten Öffnungen in der Rumpfstruktur genutzt werden können, um diese Kabinenstruktureinheit zu dem vorgesehenen Montageplatz innerhalb des Rumpfes zu leiten.

Weitere Einzelheiten und Vorteile der Erfindung ergeben sich aus den Unteransprüchen im Zusammenhang mit der Beschreibung von Ausführungsbeispielen, die anhand der Zeichnungen eingehend erläutert werden.

### KURZE BESCHREIBUNG DER ZEICHNUNGEN

- Figur 1: zeigt eine perspektivische Ansicht mehrer Kabinenstruktureinheiten in einem Flugzeugrumpf;
- Figur 2: zeigt eine Kabinenstruktureinheit im Querschnitt unter Gewichtsbelastung;
- Figur 3: zeigt eine schematische Darstellung eines Kraftübertragungselements;
- Figur 4: zeigt in einer perspektivischer Ansicht ein Seitenteil mit einem durchgehenden Kabinenlagerelement;
- Figur 5: zeigt in einer schematischen Ansicht ein Kabinenlagerelement mit Stabilisierungsrippe;
- Figur 6: zeigt eine schematische Ansicht eines Kraftübertragungselements, das zwischen einer Seitenwand und einem Stringer angebracht ist;
- Figur 7: zeigt eine Seitenwand mit einem justierbaren Kabinenlagerelement;
- Figur 8: zeigt einen Querschnitt durch ein mit zwei Kabinensegmenten verbundenes, unbelastetes Dichtelement;
- Figur 9: zeigt einen Querschnitt durch ein mit zwei Kabinensegmenten verbundenes, durch Längskräfte belastetes Dichtelement;
- Figur 10: zeigt einen Querschnitt durch ein mit zwei Kabinensegmenten verbundenes, durch Querkräfte belastetes Dichtelement;
- Figuren 11 bis 14: zeigen beispielhafte Darstellungen klappbarer Kabinenstruktureinheiten gemäß einer beispielhaften Ausführungsform der vorliegenden Erfindung;
- Figuren 15 bis 17: zeigen schematische Darstellungen eines Verfahrens, um eine Kabinenstruktureinheit gemäß einer beispielhaften Ausführungsform der vorliegenden Erfindung einzubauen;
- Figuren 18 und 19: zeigen schematische Darstellungen eines Montageverfahrens einer Kabinenstruktureinheit, die aus mehreren Kabinenstruktursegmenten gemäß einer beispielhaften Ausführungsform besteht;
- Figur 20: zeigt eine schematische Darstellung einer Kabinenstruktureinheit, die mehrere Kabineneinbauelemente gemäß einer beispielhaften Ausführungsform beinhaltet;
- Figur 21: zeigt eine schematische Darstellung mit ersten und zweiten Kabinenstruktureinheiten, die eine Rumpfkabine gemäß einer beispielhaften Ausführungsform ausbilden;
- Figur 22: zeigt eine schematische Darstellung eines Flugzeugrumpfes mit ersten und zweiten Kabinenstruktureinheiten, die mit Ausgleichselementen gemäß einer beispielhaften Ausführungsform verbunden sind; und
- Figur 23: zeigt eine schematische Darstellung eines Anpassungselements, das Kabineneinbauelemente mit der Flugzeugstruktur gemäß einer beispielhaften Ausführungsform verbindet.

### DETAILLIERTE BESCHREIBUNG BEISPIELHAFTER

### AUSFÜHRUNGSFORMEN

Gleiche oder ähnliche Komponenten in unterschiedlichen Figuren sind mit gleichen Bezugsziffern versehen. Die Darstellungen in den Figuren sind schematisch und nicht maßstäblich.

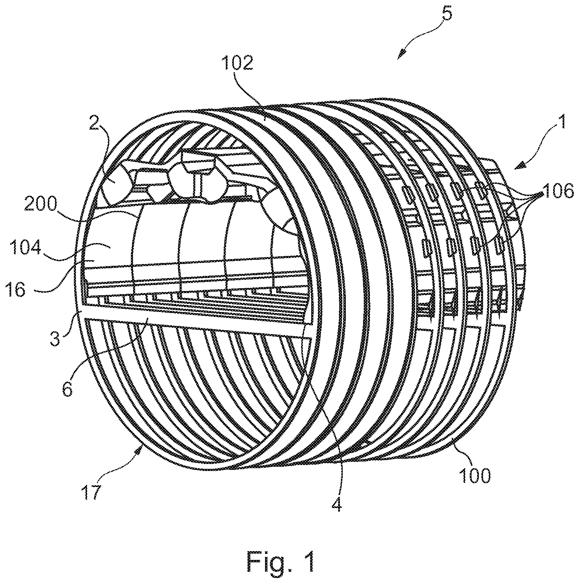

Figur 1 zeigt ein Kabinenteil in einer Flugzeugprimärstruktur 5, das aus mehreren Kabinenstruktureinheiten 1 zusammengesetzt ist. Die Flugprimärstruktur 5 besteht aus Spanten 100, einer Fußbodenstruktur 6 und einer Flugzeughaut 102. Die Längsstreben, auch Stringer genannt, sind in dieser Figur aus Übersichtlichkeitsgründen nicht dargestellt. Die einzelnen Kabinenstruktureinheiten 1 sind durch Dichtelemente 200 voneinander getrennt. Eine Kabinenstruktureinheit 1 ist aus mehreren Kabinenstruktursegmenten 16 zusammengesetzt, von denen die zwei unteren als Seitenteil 104 bezeichnet werden. Die Seitenteile 104 sind auf der einen Seite mit einer Loslagerung 3 und auf der gegenüberliegenden Seite mit einer Festlagerung 4 verbunden. Die beiden Lagerungen 3, 4 sind ihrerseits fest mit der Fußbodenstruktur 6 verbunden. An die Kabinenstruktursegmente 16, die die Decke der Kabinenstruktureinheit 1 bilden, sind Kabineneinbauelemente 2 in Form von Gepäckablagen montiert. Zwischen den Spanten 100 und den Seitenteilen 16 sind Kraftübertragungselemente 106 montiert, die durch die Kabinenstruktureinheiten 1 erzeugten Kräfte in die Spanten 100 einleiten.

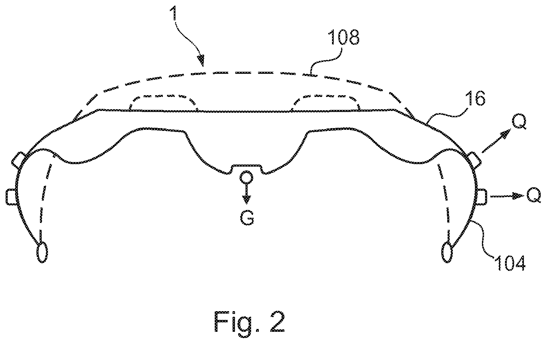

Figur 2 zeigt eine Kabinenstruktureinheit 1 im Querschnitt. Deutlich erkennbar ist, wie sich die ursprüngliche Form 108 der Kabinenstruktureinheit 1, die als gestrichelte Linie dargestellt ist, unter der Kraft G, die ausgehend von dem als Punkt dargestellten Kabinenschwerpunkt in Pfeilrichtung auf die Kabinenstruktureinheit 1 einwirkt, verformt. Die Kraft G besteht zu einem aus dem Eigengewicht der Kabinenstruktureinheit 1, die durch eine Beladung der Kabineneinbauelemente 2 zusätzlich erhöht sein kann, und zum anderen aus einer Kraftkomponente in Flugzeughochachse, wie sie beispielsweise durch Steigflug erzeugt wird. Deutlich ist ein Ausbeulen der Seitenwände 104 erkennbar. Um dieses Ausbeulen weitestgehend unterbinden zu können, sind an den Stellen der größten Ausbuchtung, aus Sichtrichtung der Flugzeughochachse oberhalb und unterhalb des Schwerpunkts, die Kraftübertragungselemente 106 angebracht. Diese Kraftübertragungselemente 106 sind in der Lage, die durch die Seitenteile 104 erzeugten Kräfte Q mit mindestens einem Bewegungsfreiheitsgrad in den Spant einzuleiten.

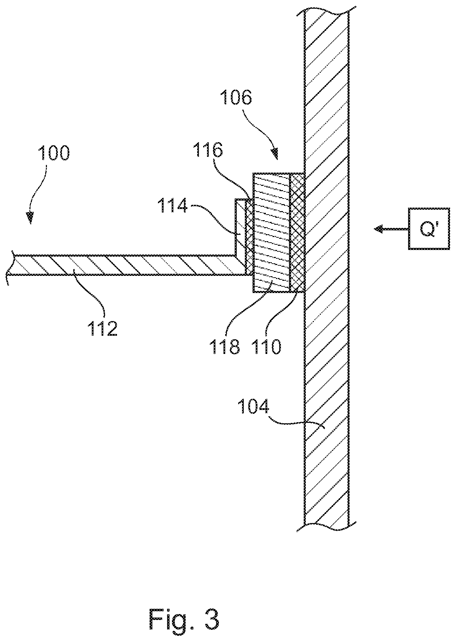

Figur 3 zeigt eine schematische Darstellung des Kraftübertragungselements 106. Hierbei ist ein Kabinenlagerelement 110 unlösbar mit der Seitenwand 104 verbunden. In dieser Figur ist der Spant 100 als Z-Spant ausgebildet, von dem lediglich ein Teil des Steges 112 und ein Schenkel sichtbar sind. Der Schenkel dient gleichzeitig als Strukturlagerelement 114. An der dem Seitenteil 104 zugewandten Fläche befindet sich eine reibungsmindernde Beilage 116, die mit dem Strukturlagerelement 114 fest verbunden ist. Diese Beilage 116 kann auch als Beschichtung ausgebildet sein. Zwischen dem Strukturlagerelement 114, respektive der Beilage 116, und dem Kabinenlagerelement 110 befindet sich ein Feder-Dämpfer-Element 118, das hier als ein flächiges Elastomer ausgeformt ist. Dieses Feder-Dämpfer-Element 118 ist mit dem Kabinenlagerelement 110 fest verbunden. Ferner zeigt die Figur 3 die Kraft Q', die den auf den Spant 100 wirkenden Anteil der Kraft Q darstellt.

Die Seitenwand 104 leitet die Kraft Q über das Kabinenlagerelement 110 an das als flächiges Elastomer mit einer progressiven Kennlinie ausgebildete Feder-Dämpfer-Element 118 ein. Die Kraft Q besteht zum größten Teil aus der auf den Spant 100 in radialer Richtung einwirkenden Kraft Q', beinhaltet jedoch auch Anteile aus Relativbewegungen zur Flugzeugprimärstruktur 5, die während des Betriebes durch Vibrationen und Verformungen hervorgerufen werden können. Damit diese Anteile nicht in den Spant 100 eingeleitet werden, dämpft das Feder-Dämpfer-Element 118 diese Anteile ab. Zusätzlich verhindert die Beilage 116 eine Haftung zwischen dem Feder-Dämpfer-Element 118 und dem Spant 100. Somit wird durch das Feder-Dämpfer-Element 118 ausschließlich die Kraft in den Spant 100 eingeleitet, wozu der Spant 100 ausgelegt ist, nämlich zur Aufnahme rein radialer Kräfte. Zusätzlich erfolgt die Krafteinleitung in den Spant durch die beschriebene Ausformung des Feder-Dämpfer-Elements 118 flächig. Damit werden lokale Spannungsspitzen vermieden.

Durch diese Ausgestaltung wird der Spant 100 von Kräften entlastet, für deren Aufnahme er nicht ausgelegt ist. Eine Einleitung solcher Kräfte könnte zu einem Ausknicken des Spants 100 führen und damit zu einer erheblichen Schwächung der Flugzeugprimärstruktur 5.

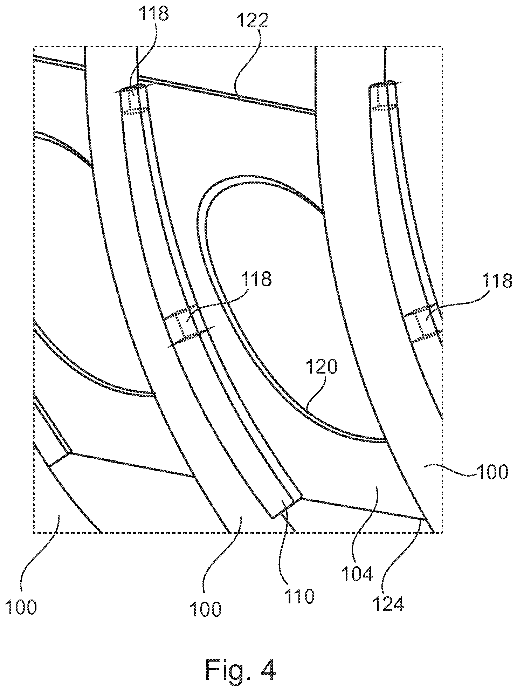

Figur 4 stellt in perspektivischer Ansicht eine Seitenwand 104 dar, die mit Fensteröffnungen 120 versehen ist. Zu sehen sind ferner drei Spanten 100, zwischen denen die Fensteröffnungen 120 zu liegen kommen. Die Seitenwand 104 weist ein oberes 122 und ein unteres Ende 124 auf. Deutlich zu sehen ist, dass das untere Ende 124 weiter von dem Spant 100 entfernt ist als das obere Ende 122. Um nun aus Kosten- und Bevorratungsgründen möglichst gleichartige Feder-Dämpfer-Elemente 118 nutzen zu können, ist das mit der Seitenwand 104 fest verbundene Kabinenlagerelement 110 so gestaltet, dass der Abstand zwischen Strukturlagerelement 114 des Spants 100 und dem Kabinenlagerelement 110 zumindest an den Stellen gleich ist, an denen das Feder-Dämpfer-Elemente 118 montiert ist. Zusätzlich ist das Kabinenlagerelement 110 zwischen dem oberen 122 und unteren Ende 124 durchgängig gestaltet. Diese durchgängige Ausformung des Kabinenlagerelements 110 führt zu einer Aussteifung der Seitenwand 104.

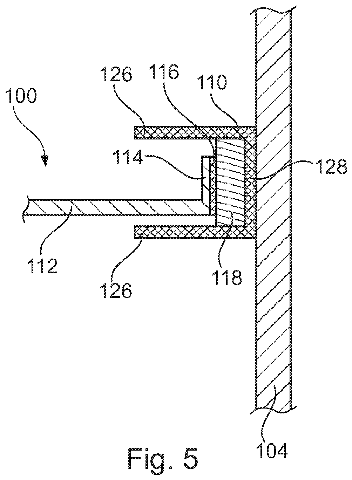

Figur 5 zeigt einen Querschnitt der in Figur 4 beschriebenen Anordnung. Zusätzlich ist das Kabinenlagerelement um zwei Stabilisierungsrippen 126 erweitert. Diese Stabilisierungsrippen 126 sind in Flugzeuglängsrichtung gesehen vor und hinter dem Spant 100 angeordnet und hier mit dem Kabinenlagerelement 110 fest verbunden. Somit bildet das Kabinenlagerelement 110 eine U-Form aus, wobei die Stabilisierungsrippen 126 senkrecht auf der Seitenwand 104 stehen und in Richtung des Spants 100 weisen. Der Abstand zwischen den Stabilisierungsrippen 126 muss so groß sein, dass die Stabilisierungsrippen 126 unter keinen Umständen während des Flugbetriebes mit den Spanten 100 in Berührung kommen, da hierdurch dann längs der Flugzeuglängsachse wirkende Kräfte auf die Spanten 100 wirken würden. Dies könnte zu einem Ausknicken der Spanten 100 und damit zu einer erheblichen Beeinträchtigung der Flugzeugprimärstruktur 5 führen. Der die Stabilisierungsrippen 126 verbindende Steg 128 kann auch als Hohlkammerprofil ausgestaltet sein, wobei die Hohlkammer ihrerseits mittels Stegen noch versteift sein kann. Die Stabilisierungsrippen 126 führen zu einer erheblichen Versteifung der Seitenwände 104. Dadurch ist es möglich, die Seitenwände in ihrem Querschnitt schwächer und damit materialsparender und leichter auszuführen.

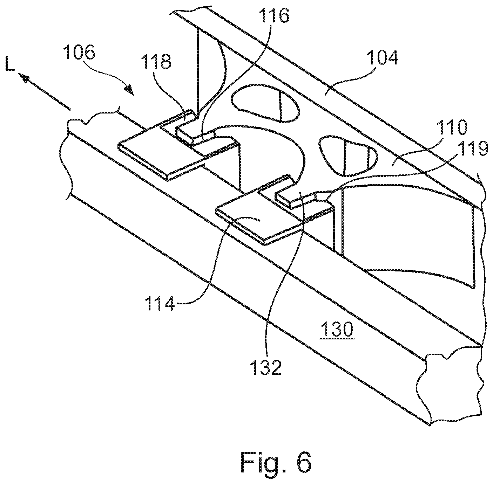

Figur 6 stellt schematisiert ein Kraftübertragungselement 106 dar, das zwischen der Seitenwand 104 und einem Stringer 130 angeordnet ist. Das mit der Seitenwand 104 verbundene Kabinenlagerelement 110 ist als eine Stütze mit zwei Fortsätzen 132 ausgebildet, wobei der Fortsatz 132 die Kontur eines Quaders aufweist. Der Fortsatz 132 greift in ein U-förmig gestaltetes Feder-Dämpfer-Element 118 derart ein, dass zwei einander gegenüberliegende Flächen des Fortsatzes 132 die Schenkel des Feder-Dämpfer-Element 118 berühren, ohne mit ihm verbunden zu sein. Diese Flächen des Fortsatzes 132 sind mit einer reibungsmindernden Beilage 116, die auch eine Beschichtung darstellen kann, versehen. Zusätzlich besitzt das U-förmige Feder-Dämpfer-Element 118 an den dem Verbindungssteg abgewandten Enden Einführschrägen 119 auf. Der Winkel, den die beiden einander gegenüberliegenden Schenkel eines Feder-Dämpfer-Elements 118 einschließen, beträgt weniger als 90°, in dem hier dargestellten Beispiel beträgt der Winkel 60°. Dieses U-förmige Feder-Dämpfer-Element 118 ist derart mit einem U-förmigen Strukturlagerelement 114 fest verbunden, dass die Schenkel des Feder-Dämpfer-Element 118 mit den Schenkeln des Strukturlagerelements 114 deckungsgleich sind. Das Strukturlagerelement 114 ist fest mit dem Stringer 130 verbunden. Hierbei stehen die Schenkel des Strukturlagerelement 114 sowohl senkrecht auf dem Stringer 130 als auch senkrecht zur Flugzeuglängsachse.

Eine durch die Seitenwand 104 erzeugte Kraft wird über den Fortsatz 132 des Kabinenlagerelements 110 über das Feder-Dämpferelement 118 in das Strukturlagerelement 114 eingeleitet, das die Kraft wiederum in den Stringer einleitet. Aufgrund der Anordnung kann hauptsächlich die Kraftkomponente die entlang der Flugzeuglängsachse verläuft und in der Darstellung mit L bezeichnet ist, in den Stringer eingeleitet werden. Theoretisch kann durch eine Drehbewegung des Fortsatzes 132 eine weitere Kraftkomponente entstehen, die in den Stringer eingeleitet wird. Diese ist jedoch, falls sie überhaupt auftreten sollte, so gering, dass sie zu keiner Schädigung des Stringers 130 durch Ausknicken führen kann. Damit kann das Feder-Dämpfer-Element 106 nur Kräfte mit wenigstens einem Bewegungsfreiheitsgrad übertragen.

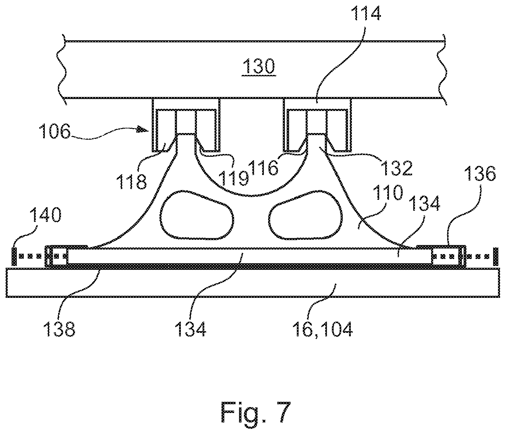

In Figur 7 ist das Kabinenlagerelement 110 dargestellt, das gegenüber der Seitenwand 104 justierbar angeordnet ist. Hierzu ist das Kabinenlagerelement 110 fest mit einem Schiebeelement 134 verbunden. Das Schiebeelement 134 läuft in einer Schiene 136, die mit der Seitenwand 104 oder einem anderen Kabinenstruktursegment 16 fest verbunden ist. Zwischen der Schiene 136 und dem Schiebeelement 134 befindet sich eine reibungsmindernde Beilage 138. Um das Schiebeelement 134 gegenüber der Seitenwand 104 oder dem Kabinenstruktursegment 16 justieren zu können, sind an den Enden der Schiene 136 Stellglieder 140 in Form von Schrauben angebracht, mit denen das Schiebeelement 134, respektive das Kabinenlagerelement 110, verfahren und fixiert werden kann. Die Schiene 136 ist auf der Seitenwand 104 bzw. auf dem Kabinenstruktursegment 16 so ausgerichtet, dass sie parallel zum Stringer 130 verläuft.

Aufgrund von Fertigungstoleranzen ist es möglich, dass bei der Montage der Kabinenstruktureinheit 1 an der Flugzeugstruktur 6 das in Figur 6 beschriebene Kabinenlagerelement 110 mit seinem Fortsatz 132 nicht in das mit dem Stringer 130 fest verbundene Strukturlagerelement 114 eingreift, sondern die beiden Lagerelemente 110, 114 gegeneinander verschoben sind. Durch die Justagemöglichkeit kann das Kabinenlagerelement 110 so justiert werden, dass die beiden Lagerelemente 110, 114 problemlos ineinander greifen. Dieser Justagevorgang kann vom Monteur dadurch ausgeführt werden, dass er durch eine im Rumpf befindliche Fensteröffnung greift. Durch die in Figur 6 beschriebenen Einführschrägen 119, die auch oder zusätzlich am Fortsatz 132 angebracht sein können, wird der Justagevorgang dahingehend vereinfacht, dass die Fortsätze 132 nicht absolut exakt im Bereich zwischen den Schenkeln des U-förmigen Feder-Dämpfer-Elements 118 stehen müssen, damit die Fortsätze 132 in das U-förmigen Feder-Dämpfer-Elements 118 eingeführt werden können. Die Einführschrägen 119 führen den Fortsatz 132 auch bei einem Versatz in das U-förmigen Feder-Dämpfer-Elements 118 ein, wodurch eine exakte Justage/Positionierung erleichtert wird.

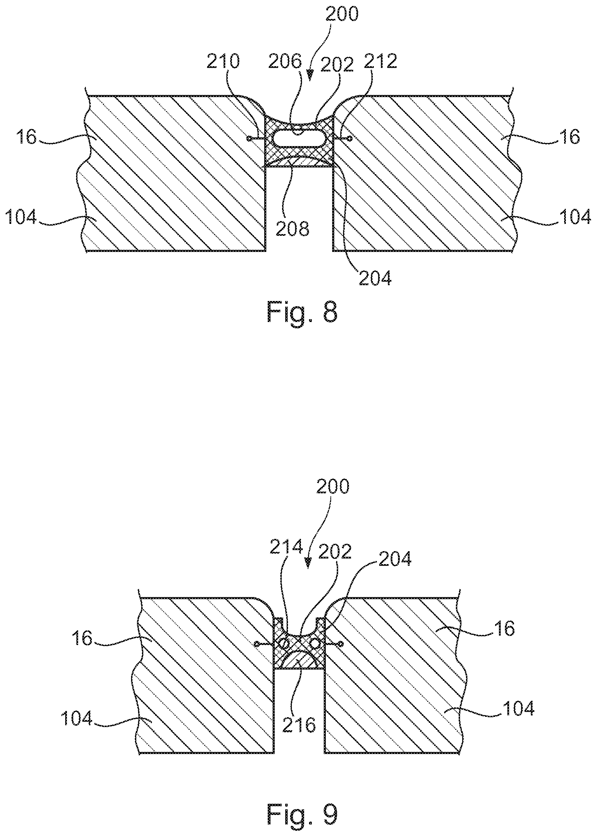

Figur 8 zeigt im Querschnitt ein Dichtelement 200 in unbelastetem Zustand. Das Dichtelement 200 ist zwischen zwei benachbarten Kabinensegmenten 16 angeordnet und verschließt einen Spalt zwischen diesen. Die benachbarten Kabinensegmente 16 können zum einen einer gemeinsamen Kabinenstruktureinheit 1 angehören. Damit verläuft der Spalt in der Regel parallel zur Flugzeuglängsachse. Zum anderen können die benachbarten Kabinensegmente 16 auch benachbarten Kabinenstruktureinheiten 1 angehören. Damit verläuft der Spalt in der Regel quer zur Flugzeuglängsachse. Die Kabinensegmente 16 können auch als Seitenwände 104 ausgeformt sein, die in Flugzeuglängsachse gesehen hintereinander angeordnet sind. Das Dichtelement 200 besteht aus zwei einander gegenüberliegenden, parallel verlaufenden Längswänden 202 und zwei einander gegenüberliegenden, parallel verlaufenden Querwänden 204. Die Längs- 202 und Querwände 204 umschließen eine Hohlkammer 206. Die Hohlkammer 206 wird durch eine Form begrenzt, die der eines Rechtecks gleicht, bei der die Schmalseiten durch einen in Richtung der Querwände 204 weisenden Halbkreis ersetzt wurden. Die Hohlkammer 206 kann an seinen hier nicht sichtbaren Enden durch Vulkanisieren, Schweißen oder Kleben verschlossen sein. Die Außenseiten der Längswände 202 sehen aus, als sei ihnen aus ihrem ursprünglich rechteckigen Querschnitt ein Kreissegment 208 entfernt worden. Oder anders ausgedrückt sind die Außenseiten der Längswände 202 konkav in Richtung der Hohlkammer 206 gewölbt. Somit ergibt sich von der Mitte der Längswand 202 ausgehend eine kontinuierliche Vergrößerung der Materialstärke zu den Querwänden 204 hin. Jede Querwand 204 weist mittig eine Feder 210 auf, die in eine Nut 212 des Seitenteils 104 greift. Durch diese symmetrische Anordnung des Dichtelements 200 ergibt sich keine Vorzugseinbaurichtung. Die Nut- 212 und Federanordnung 210 ist dergestalt, dass die Querwände 204 plan an den Seitenwänden 104 anliegen. Auch unter Krafteinwirkung in Längsrichtung des Dichtelements 200 lässt sich die Feder 210 gegenüber der Nut 212 nicht bewegen. Somit ist sichergestellt, dass sich im Betrieb keine Durchgänge bilden, durch die Wärme aus der Passagierkabine entweichen oder Geräusche von außerhalb in die Passagierkabine eindringen können. Auch kann der Hohlraum 206 mit einem gasförmigen, flüssigen oder festen Medium gefüllt sein. Das Medium sollte kompressibel sein, damit das Dichtelement seine Funktion erfüllen kann. Natürlich kann das Medium auch die Funktionalität des Dichtelements 200 bezüglich der Wärmedämmung und Geräuschreduzierung unterstützen oder auch vollständig übernehmen. Auch ist es möglich, das Dichtelement 200 gesamt oder nur dessen Außenseiten der Längswände 202 dem Interieur der Passagierkabine farblich anzupassen.

Figur 9 zeigt einen Querschnitt durch ein mit zwei Kabinensegmenten 16 verbundenes, durch entlang der Flugzeuglängsachse auftretende Kräfte belastetes Dichtelement 200. Deutlich ist zu erkennen, wie sich aufgrund der Spaltverkleinerung die Längswände 202 aufeinander zu bewegt haben und sich nunmehr in der Mitte berühren. Dadurch wird die ursprünglich eine Hohlkammer 206 in zwei Hohlkammern 214 geteilt, die zusammen ein kleineres Volumen besitzen wie die ursprüngliche Hohlkammer 206. Zusätzlich ist deutlich ersichtlich, dass sich die Höhe des Kreissegments 216 gegenüber dem Kreissegment 208 vergrößert hat, also eine Einbeulung der Längswände 202 stattgefunden hat. Ab dem Zeitpunkt, ab dem sich die Längswände 202 gegenseitig berühren, wird die Kraft die in das Dichtelement 200 eingeleitet wird, nicht mehr durch das Dichtelement 200 aufgenommen, sondern an die benachbarte Seitenwand 104 weitergegeben. Damit ändert sich die Federkonstante des Dichtelements 200. Diese Maßnahme verhindert eine gegenseitige Berührung der Seitenwände 104 und damit eine eventuelle Beschädigung dieser.

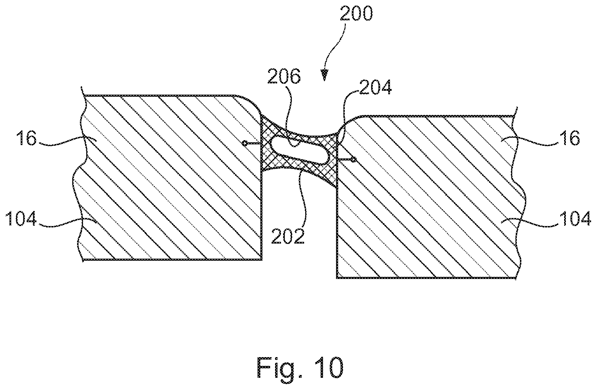

Figur 10 zeigt einen Querschnitt durch ein mit zwei Kabinensegmenten 16 verbundenes, durch quer zur Flugzeuglängsachse auftretende Kräfte belastetes Dichtelement 200. Der Unterschied zu der unter Figur 8 beschriebenen Anordnung liegt darin, dass die Seitenwände 104 quer zur Flugzeuglängsachse versetzt sind. Es ist deutlich zu erkennen, dass durch die Gestaltung des Dichtelements 200 die Querwände 204 trotz des Versatzes plan an dem Kabinensegment 16 anliegen.

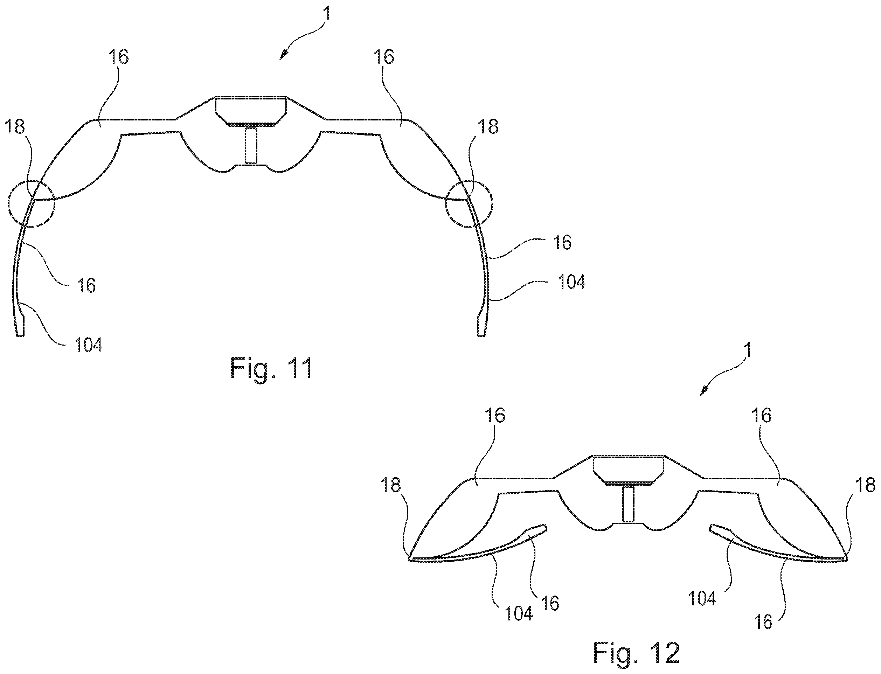

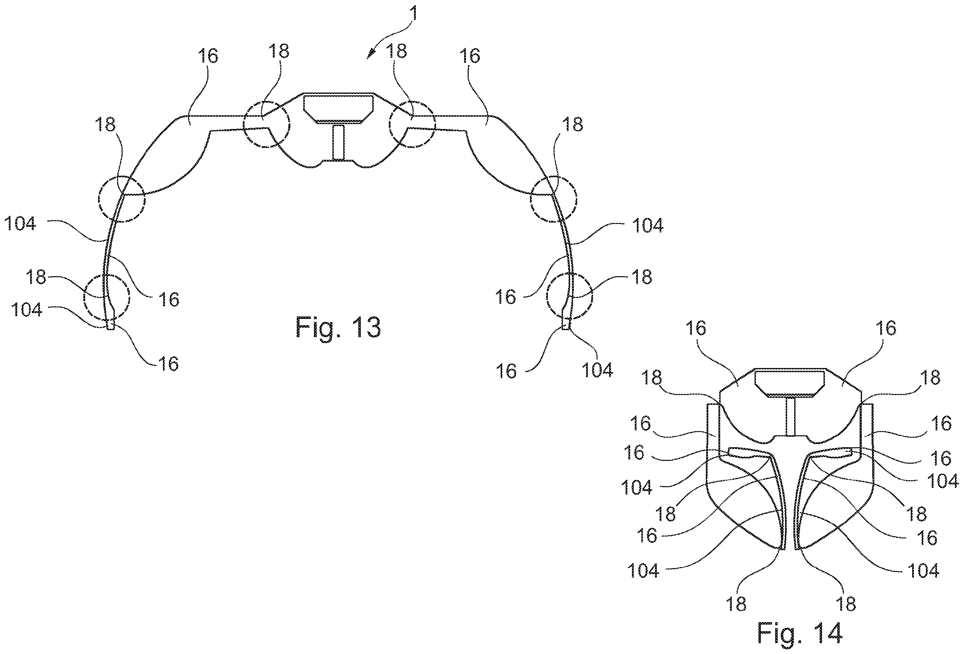

Figuren 11 und 12 zeigen eine beispielhafte Ausführungsform einer Kabinenstruktureinheit 1, die mehrere Kabinenstruktursegmente aufweist, die miteinander mittels Scharniere verbunden sind. Jede Seite der Kabinenstruktureinheit 1 ist in dieser beispielhaften Ausführungsform mit einem Scharnier 18 versehen, so dass die Kabinenstruktureinheit 1 so wie in Figur 12 dargestellt, zusammengeklappt werden kann. Bezug nehmend auf die Figuren 13 und 14, eine Kabinenstruktureinheit 1 kann eine Vielzahl an Kabinenstruktursegmenten 16 aufweisen, von denen jedes mittels einem Scharnier mit dem anderen verbunden ist. Bezug nehmend auf Figur 12, kleine Einheiten einer Kabinenstruktureinheit können in geklapptem Zustand bereit gestellt werden.

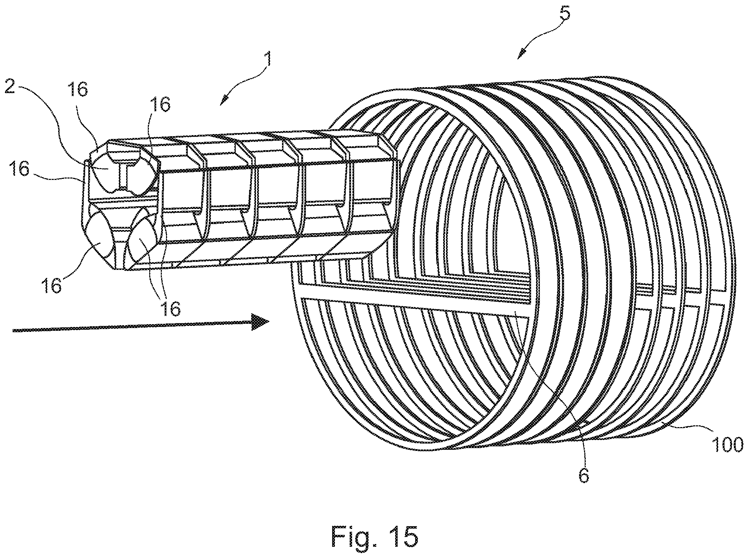

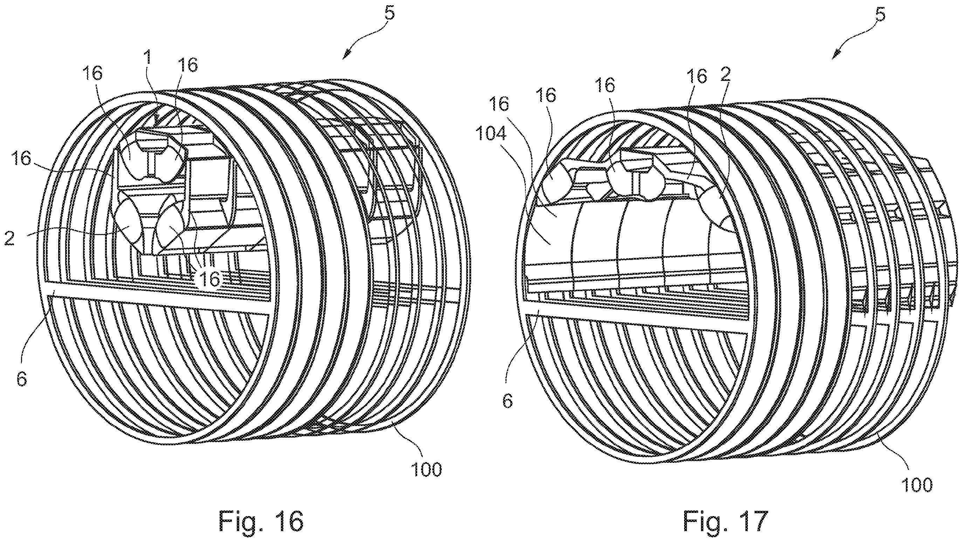

Figuren 15 bis 17 zeigen eine Möglichkeit, wie eine klappbare Kabinenstruktureinheit hergestellt werden kann. Alle Kabinenstruktursegmente 16 können montiert werden, bevor die Kabinenstruktureinheit in das Rumpfsegment eingeführt wird. Gemäß Figur 15 können die Struktureinheit 1 und die Kabineneinbauelemente 2 außerhalb der Flugzeugstruktur 5 vormontiert werden. Die vormontierte Kabinenstruktureinheit 1 stellt in zusammengeklappten Zustand folglich ein kleines Volumen bereit .Wie in Fig. 16 gezeigt ist, kann die zusammengeklappte Kabinenstruktureinheit 1 zu der vorbestimmten Befestigungsposition an der Flugzeugstruktur 5 gelenkt werden. Nach dem Erreichen der vorbestimmten Befestigungsposition an der Flugzeugstruktur 5 wird das Kabinenstruktursegment 16 auseinandergeklappt und an der Flugzeugstruktur 5 befestigt, wie dies Figur 17 zeigt. Auf diese Weise wird ein einfacher und schneller Weg für den Einbau einer Kabinenstruktureinheit bereit gestellt.

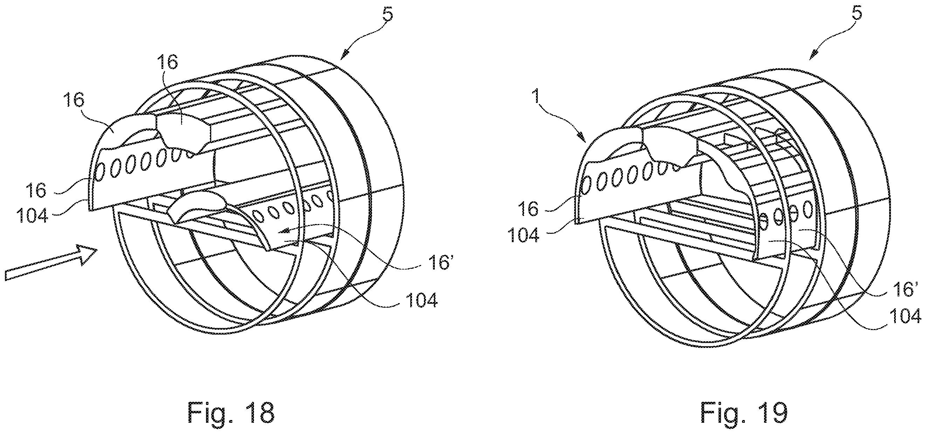

Die Figuren 18 und 19 zeigen ferner eine Möglichkeit, eine Kabinenstruktureinheit 1 an einer Flugzeugstruktur 5 zu montieren. Die Kabinenstruktureinheit 1 kann auch mehrere Kabinenstruktursegmente 16 aufweisen, die separat in die Flugzeugstruktur 5 zu der vorbestimmten Position geführt werden. Als nächstes werden die Kabinenstruktursegmente 16, 16" miteinander verbunden, um die Kabinenstruktureinheit 1 zu erzeugen. Auf diese Weise können wenigstens einige Teile der Kabinenstruktureinheit außerhalb des Flugzeugs vormontiert und damit der Montageablauf beschleunigt werden.

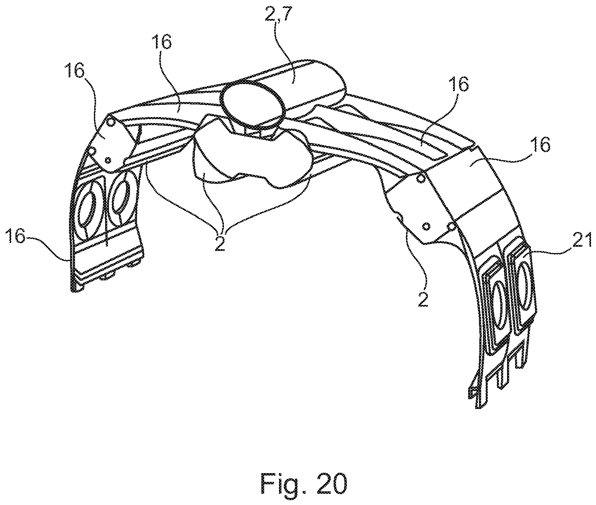

Fig. 20 zeigt eine schematische Darstellung einer Kabinenstruktureinheit 1, die aus mehreren Kabinenstruktursegmenten 16 und mehreren Kabineneinbauelementen 2 besteht. Beispielsweise können die Kabineneinbauelemente 2, wie Luftkanäle und Gepäckablagen außerhalb in die Kabinenstruktureinheit 1 eingebaut werden. Folglich können Anpassungselemente 21, wie Fensteranpasseinheiten, außerhalb der Flugzeugstruktur eingebaut werden. Folglich kann eine vorgefertigte Kabinenstruktureinheit, die alle funktionellen Elemente wie Kabineneinbauelemente 2, Verbindungselemente 7 und Anpassungselemente 21 enthält, können außerhalb des Flugzeugrumpfes vormontiert werden, so dass ein schneller und einfacher Einbau auch innerhalb der Flugzeugstruktur 5 bereitgestellt werden kann.

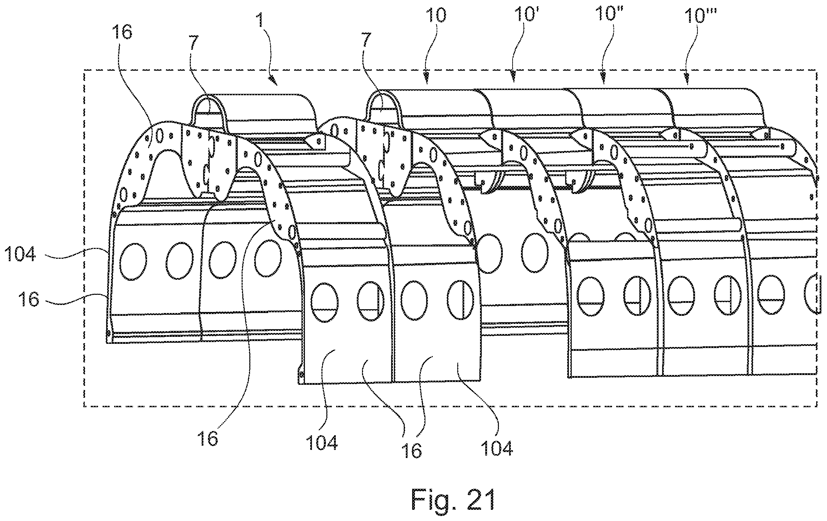

Figur 21 zeigt eine Flugzeugkabine, die aus mehreren Kabinenstruktureinheiten 1, 10, 10', 10", 10"' besteht, die miteinander befestigt sind. Wie in Figur 21 gezeigt ist, kann die gesamte Flugzeugkabine modular aus mehreren Strukturkabineneinheiten 1, 10, 10', 10", 10'" aufgebaut sein. Jede Kabinenstruktureinheit kann ihrerseits außerhalb des Flugzeugs vormontiert werden und abschließend zusammen mit der Kabinenstruktureinheit 10 in die Flugzeugstruktur montiert werden. Jede Kabinenstruktureinheit 1, 10 kann ihrerseits beispielsweise aus versteifenden Sichtblenden 9, Tragrahmen 10, Kabinenstruktursegmente 16 oder Verbindungselemente 7 bestehen.

Die Kabinenstruktureinheiten 1, 10 können aneinander auf einfache Weise mittels Befestigungselementen befestigt sein. Zwischen den Kabinenstruktureinheiten kann ein Ausgleichselement 20 eingesetzt sein, um Bewegungen jeder einzelnen Kabinenstruktureinheit 1, 10 auszugleichen. Jede Kabinenstruktureinheit 1, 10 kann in einer Art ausgebildet sein, dass das Ausgleichselement 20 für den Passagier nicht sichtbar ist. Die Fuge zwischen den Kabinenstruktureinheiten 1, 10 kann, bezogen auf herkömmliche Flugzeugkabinen, aufgrund der Entkopplung der inneren Kabinenstruktureinheiten von der Flugzeugstruktur verringert werden, so dass Änderungen im Volumen der Flugzeugstruktur 5 aufgrund von Druck oder Temperatur keinen Einfluss auf die innere Kabinenstruktureinheiten 1, 10 haben können.

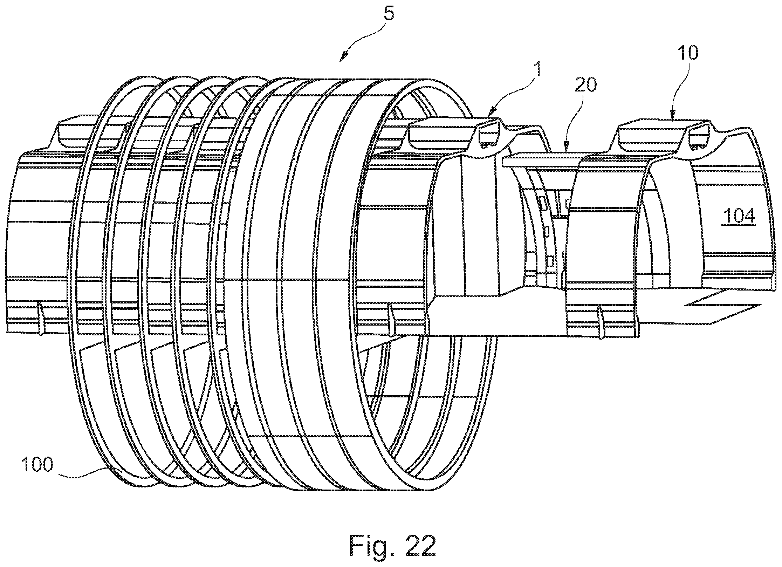

Figur 22 zeigt einen beispielhaften Aufbau eines Flugzeugrumpfes, der mehrere Kabinenstruktureinheiten 1, 10 beinhaltet. Um Bewegungen zwischen jeder Kabinenstruktureinheit 1 und 10 auszugleichen, kann auch die so genannte Türspaltlinie als Ausgleichselement 20 genutzt werden. Daher kann sich jede Kabinenstruktureinheit 1, 10 relativ zu der anderen bewegen, ohne dass die Stressbelastung jeder Kabinenstruktureinheit 1, 10 aufgrund dieser Relativbewegungen zunimmt.

Die Kabinenstruktureinheit 1 kann an der Flugzeugstruktur 5 mittels eines Loslagers 3 oder eines Festlagers 4 angebracht werden. Das Kabineneinbauelement 2 kann auch aus Monumenten wie Bordküchen, Toilette oder anderen Funktionseinheiten innerhalb einer Kabine bestehen. Die Kabineneinbauelemente 2 sind in die freitragenden Kabinenstruktureinheiten 1, 10 integriert und ebenfalls von der Flugzeugstruktur 5 entkoppelt. Daher bewegen sich im Falle einer Deformation der Kabinenstruktureinheit 1 die Kabineneinbauelemente 2 auch in die gleiche und nicht in die entgegengesetzte Richtung. Auf diese Weise kann das Risiko von Schäden, die durch entgegengesetzte Bewegungen einer jeden Kabinenstruktureinheit 1, insbesondere eines jeden Kabineneinbauelements 2, herrühren, verringert werden. Indem eine Kombination aus einer Los- und einer Festlagerung 3 und 4 genutzt wird, kann auch die Bewegung in der vertikalen Richtung, entsprechend der Z-Achse, verringert werden, so dass nur Bewegungen entlang der Rumpflängsrichtung auftreten können.

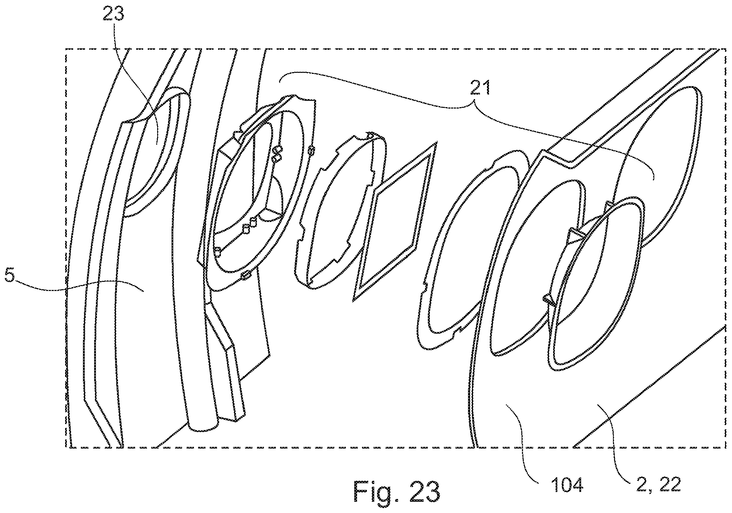

Figur 23 zeigt eine schematische Darstellung eines Anpassungselements 21, das Kabineneinbauelemente 2 der Kabinenstruktureinheit 1 mit einer Flugzeugstruktur 5 verbindet. Beispielsweise müssen Luftkanäle ebenso wie Fenstereinheiten mit den Einbauten der Flugzeugstruktur 5 verbunden werden. Im Falle des Fensterpaneels 2, 22 ist es notwendig, ein Anpassungselement 21 für die Fensteröffnung 23 der Flugzeugstruktur 5 bereitzustellen. Das Anpassungselement 21 stellt eine Verbindung zwischen dem Fensterpaneel 22 und der Fensteröffnung 23 bereit. Das Anpassungselement 21 kann mehrere Bauteile bereitstellen, die dichtende und flexible Eigenschaften aufweisen können. Das Anpassungselement 21 muss beweglich sein, weil Relativbewegungen zwischen der Flugzeugstruktur und der Kabinenstruktureinheit 1 auftreten können.

Das Anpassungselement 21 kann beispielsweise eine Einsteck-Schnapp-Verbindung bereitstellen, so dass auf einfache Art die Kabineneinbauelemente 2 mit den Funktionselementen der Rumpfstruktur 5 verbunden werden können. Durch den Gebrauch von Einsteck-Schnapp-Verbindungen für die Verbindung der Kabineneinbauelemente 2 kann die Montagezeit verringert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Kabinenstruktureinheit
- 2: Kabineneinbauelement, Fensterpaneel
- 3: Loslagerung
- 4: Festlagerung
- 5: Flugzeugstruktur
- 6: Fußbodenstruktur
- 7: Verbindungselement
- 9: Sichtblende
- 10: Kabinenstruktureinheit, Tragrahmen
- 16: Kabinenstruktursegment
- 18: Scharnier
- 20: Ausgleichselement
- 21: Anpassungselement
- 22: Fensterpaneel
- 23: Fensteröffnung
- 100: Spant
- 102: Flugzeughaut
- 104: Seitenwand
- 106: Kraftübertragungselement
- 108: ursprüngliche Form
- 110: Kabinenlagerelement
- 112: Steg
- 114: Strukturlagerelement
- 116: Beilage
- 118: Feder-Dämpfer-Element
- 119: Einführschräge
- 120: Fensteröffnung
- 122: oberes Ende der Seitenwand
- 124: unteres Ende der Seitenwand
- 126: Stabilisierungsrippe
- 128: Steg
- 130: Stringer
- 132: Fortsatz
- 134: Schiebeelement
- 136: Schiene
- 138: reibungsmindernder Belag
- 140: Stellglied
- 200: Dichtelement
- 202: Längswand
- 204: Querwand
- 206: Holraum
- 208: Kreissegment
- 210: Feder
- 212: Nut
- 214: Hohlkammer
- 216: Kreissegment

- G: Kraft
- Q: Kraft
- Q': Kraft
- L: Kraft

## Patentansprüche

1. Flugzeug, aufweisend:
eine Flugzeugprimärstruktur,
ein Kabinenstruktursegment (16),
ein Kraftübertragungselement,
wobei die Flugzeugprimärstruktur (5) Spanten (100) und Stringer (130) aufweist, die dazu ausgelegt sind, nur in einer Richtung Kraft (Q', L) aufzunehmen,
wobei das Kraftübertragungselement das Kabinenstruktursegment (16) mit der Flugzeugprimärstruktur (5) lösbar verbindet, und
wobei das Kraftübertragungselement ein Kabinenlagerelement (110) sowie ein Strukturlagerelement (114) aufweist,
wobei das Kabinenlagerelement (110) mit dem Kabinenstruktursegment (16) und das Strukturlagerelement (114) mit der Flugzeugprimärstruktur (5) verbunden ist,
wobei das Kraftübertragungselement (106) derart gestaltet ist, dass eine Kraftübertragung zwischen dem Kabinenstruktursegment (16) und der Flugzeugprimärstruktur (5) mit mindestens einem Bewegungsfreiheitsgrad erfolgt, und
wobei das Kraftübertragungselement (106) an einem Spant (100) oder einem Stringer (130) angeordnet ist, so dass in den Stringer (130) nur entlang der Flugzeuglängsachse entstehende Kräfte (L) beziehungsweise in den Spant (100) nur senkrecht auf
den Spant (100) stehende Kräfte (Q') eingeleitet werden.

2. Flugzeug nach Anspruch 1, **dadurch gekennzeichnet, dass** sich zwischen dem Strukturlagerelement (114) und dem Kabinenlagerelement (110) eine reibungsmindernde Beilage (116) befindet.

3. Flugzeug nach Anspruch 1 oder 2, **dadurch gekennzeichnet, dass** zwischen dem Strukturlagerelement (114) und dem Kabinenlagerelement (110) ein Feder-Dämpfer-Element (118) angeordnet sein kann.

4. Flugzeug nach Anspruch 3, **dadurch gekennzeichnet, dass** das Feder-Dämpfer-Element (118) entweder mit dem Kabinenlagerelement (110) oder dem Strukturlagerelement (114) fest verbunden ist.

5. Flugzeug nach einem der Ansprüche 1 bis 4, **dadurch gekennzeichnet, dass** die Kabinenstruktureinheit (1) links und rechts je eine Seitenwand (104) mit einem oberen Ende (122) und einem unteren Ende (124) aufweist, zwischen denen das Kabinenlagerelement (110) wenigstens teilweise durchgängig verläuft und mit der Seitenwand (104) fest verbunden ist.

6. Flugzeug nach Anspruch 5, **dadurch gekennzeichnet, dass** das untere Ende (124) der Seitenwand (104) von der Flugzeugprimärstruktur (5) weiter entfernt ist als das obere Ende (122) und dass das Kabinenlagerelement (110) so ausgebildet ist, dass der Abstand des Kabinenlagerelements (110) zum
Strukturlagerelement (114) im Wesentlichen konstant ist.

7. Flugzeug nach Anspruch 5 oder 6, **dadurch gekennzeichnet, dass** an dem Kabinenlagerelement (110) eine Stabilisierungsrippe (126) angeformt ist.

8. Flugzeug nach einem der Ansprüche 1 bis 4, **dadurch gekennzeichnet, dass** das Kabinenlagerelement (110) als eine Stütze mit einem Fortsatz (132) ausgeformt ist, die mit einem Schiebeelement (134) fest verbunden ist.

9. Flugzeug nach Anspruch 8, **dadurch gekennzeichnet, dass** das Schiebeelement (134) in einer Schiene (136) justierbar angeordnet ist, die mit dem Kabinenstruktursegment (16; 104) fest verbunden ist.

10. Flugzeug nach Anspruch 9, **dadurch gekennzeichnet, dass** die Schiene in der Richtung angeordnet ist, in der das Kraftübertragungselement die Kraft übertragen kann.

## Claims

1. An aircraft comprising:
a primary aircraft structure,
a cabin structure segment (16),
a force transmitting element,
wherein the primary aircraft structure (5) comprises frames (100) and stringers (130) that are designed for absorbing a force (Q', L) in one direction only,
wherein the force transmitting element separably connects the cabin structure segment (16) to the primary aircraft structure (5), and
wherein the force transmitting element (106) comprises a cabin bearing element (110), as well as a structure bearing element (114),
wherein the cabin bearing element (110) is connected to the cabin structure segment (16) and the structure bearing element (114) is connected to the primary aircraft structure (5),
wherein the force transmitting element (106) is designed in such a way that a force transmission between the cabin structure segment (16) and the primary aircraft structure (5) can take place with at least one degree of freedom of motion, and
wherein the force transmitting element (106) is arranged on a frame (100) or a stringer (130) such that only forces (L) are introduced into the stringer (130) that occur along the aircraft longitudinal axis, respectively only forces (Q') are introduced into the frame (100) that act perpendicular on the frame (100).

2. Aircraft according to claim 1, **characterized in that** a friction-reducing insert (116) is situated between the structure bearing element (114) and the cabin bearing element (110).

3. Aircraft according to claim 1 or 2, wherein a spring damping element (118) can be arranged between the structure bearing element (114) and the cabin bearing element (110).

4. Aircraft according to claim 3, **characterized in that** the spring damping element (118) is rigidly connected either to the cabin bearing element (110) or to the structure bearing element (114).

5. Aircraft according to one of the claims 1 to 4, **characterized in that** the cabin structure unit (1) respectively features one left and one right side wall (104) with an upper end (122) and a lower end (124), between which the cabin bearing element (110) extends in an at least partially continuous fashion and is rigidly connected to the side wall (104).

6. Aircraft according to claim 5, **characterized in that** the lower end (124) of the side wall (104) is spaced apart from the primary aircraft structure (5) by a greater distance than the upper end (122), and wherein the cabin bearing element (110) is realized such that the distance of the cabin bearing element (110) from the structure bearing element (114) is essentially constant.

7. Aircraft according to claim 5 or 6, **characterized in that** a stabilizing rib (126) is moulded onto the cabin bearing element (110).

8. Aircraft according to one of the claims 1 to 4, **characterized in that in that** the cabin bearing element (110) is realized in the form of a brace with an extension (132) that is rigidly connected to a sliding element (134).

9. Aircraft according to claim 8, **characterized in that** the sliding element (134) is adjustably arranged in a rail (136) that is rigidly connected to the cabin structure segment (16; 104).

10. Aircraft according to claim 9, **characterized in that** the rail is arranged in the direction, in which the force transmitting element can transmit the force.

## Revendications

1. Aéronef, comportant :
une structure primaire d'aéronef,
un segment structural de cabine (16),
un élément de transmission de forces,
dans lequel la structure primaire d'aéronef (5) comporte des couples (100) et des lisses (130), qui sont conçus pour recevoir des forces (Q', L) uniquement dans une direction,
dans lequel l'élément de transmission de forces relie de manière amovible le segment structural de cabine (16) à la structure primaire d'aéronef (5), et
dans lequel l'élément de transmission de forces comporte un élément de support de cabine (110) ainsi qu'un élément de support de structure (114),
dans lequel l'élément de support de cabine (110) est relié au segment structural de cabine (16) et l'élément de support de structure (114) à la structure primaire d'aéronef (5),
dans lequel l'élément de transmission de forces (106) est configuré de telle manière qu'une transmission de forces entre le segment structural de cabine (16) et la structure primaire d'aéronef (5) s'effectue avec au moins un degré de liberté de mouvement, et
dans lequel l'élément de transmission de forces (106) est disposé sur un couple (100) ou une lisse (130), de telle sorte que seules des forces (L) survenant le long de l'axe longitudinal de l'aéronef sont transmises dans la lisse (130) ou seules des forces (Q') perpendiculaires au couple (100) sont transmises dans le couple (130).

2. Aéronef selon la revendication 1, **caractérisé en ce qu'**une garniture diminuant la friction (116) se trouve entre l'élément de support de structure (114) et l'élément de support de cabine (110).

3. Aéronef selon la revendication 1 ou 2, **caractérisé en ce qu'**un élément ressort-amortisseur (118) peut être disposé entre l'élément de support de structure (114) et l'élément de support de cabine (110).

4. Aéronef selon la revendication 3, **caractérisé en ce que** l'élément ressort-amortisseur (118) est fixé solidairement soit à l'élément de support de cabine (110), soit à l'élément de support de structure (114).

5. Aéronef selon l'une des revendications 1 à 4, **caractérisé en ce que** l'unité structurale de cabine (1) comporte à gauche et à droite respectivement une paroi latérale (104) dotée d'une extrémité supérieure (122) et d'une extrémité inférieure (124), entre lesquelles l'élément de support de cabine (110) s'étend au moins en partie de manière continue et est fixé solidairement à la paroi latérale (104).

6. Aéronef selon la revendication 5, **caractérisé en ce que** l'extrémité inférieure (124) de la paroi latérale (104) est plus éloignée de la structure primaire d'aéronef (5) que l'extrémité supérieure (122) et **en ce que** l'élément de support de cabine (110) est réalisé de telle manière que la distance entre l'élément de support de cabine (110) et l'élément de support de structure (114) est sensiblement constante.

7. Aéronef selon la revendication 5 ou 6, **caractérisé en ce qu'**une nervure de stabilisation (126) est formée sur l'élément de support de cabine (110).

8. Aéronef selon l'une des revendications 1 à 4, **caractérisé en ce que** l'élément de support de cabine (110) est formé en tant que support doté d'un appendice (132), qui est fixé solidairement à un élément coulissant (134).

9. Aéronef selon la revendication 8, **caractérisé en ce que** l'élément coulissant (134) est disposé de manière réglable dans un rail (136), qui est fixé solidairement au segment structural de cabine (16 ; 104).

10. Aéronef selon la revendication 9, **caractérisé en ce que** le rail est disposé dans la direction dans laquelle l'élément de transmission de forces peut transmettre la force.
